# EUROPÄISCHE PATENTSCHRIFT

(11) **EP 3 699 496 B1**
(45) Veröffentlichungstag und Bekanntmachung des Hinweises auf die Patenterteilung: **02.08.2023**
(21) Anmeldenummer: 20153759.4
(22) Anmeldetag: 27.01.2020
(51) Int. Cl.: F24C 15/20, A01G 7/04

(54) **DUNSTABZUGSHAUBE MIT LEUCHTMODUL**
VAPOUR EXTRACTOR HOOD WITH LIGHT MODULE
HOTTE ASPIRANTE POURVU DE MODULE D'ÉCLAIRAGE

(30) Priorität: 22.02.2019 DE 102019202421
(43) Veröffentlichungstag der Anmeldung: 26.08.2020
(73) Patentinhaber: BSH Hausgeräte GmbH, 81739 München (DE)
(72) Erfinder: Abele, Dominik, 76646 Bruchsal (DE); Hörter, Simon, 76229 Karlsruhe (DE); Wadlinger, Ralf, 68766 Hockenheim (DE)

(56) Entgegenhaltungen:
- EP-A1- 2 905 544
- DE-A1-102005 060 359
- DE-U1-202009 013 432

## Beschreibung

Die Erfindung betrifft eine Dunstabzugshaube mit Leuchtmodul.

Bei Dunstabzugshauben ist es bekannt ein oder mehrere Leuchtmodule vorzusehen, um die Umgebung der Dunstabzugshaube, insbesondere den Raum unterhalb der Dunstabzugshaube, in dem sich in der Regel das Kochfeld befindet, auszuleuchten.

Ein Nachteil liegt darin, dass dieses Licht nicht oder nur unzureichend für weitere Zwecke verwendet werden kann.

In EP 2 905 544 A1 ist eine Dunstabzugshaube zur Phototherapie beschrieben, die eine Lichtquelle mit hoher Beleuchtungsstärke umfasst. Die Lichtquelle ist hierbei in der Lage ein Vollspektrum-Licht auszugeben. DE 20 2009 013 432 U1 beschreibt eine Luftreinigungseinrichtung, insbesondere zur Belüftung einer Kochfläche, mit einem Haubenkörper und einem am Haubenkörper angeordneten Kamin mit einer Wandung, wobei im Kamin ein Aufnahmeraum zur Aufnahme einer Pflanze vorgesehen ist und in der Wandung des Kamins zumindest eine Ausnehmung eingebracht ist, durch die der Aufnahmeraum von außen zugänglich ist.

Aufgabe der vorliegenden Erfindung ist es daher eine Dunstabzugshaube zu schaffen, bei der zusätzlich zum Ausleuchten des Kochfeldes für einen Kochvorgang und dem Absaugen von Dünsten und Wrasen bei einfachem Aufbau der Dunstabzugshaube eine weitere Funktion durch die Dunstabzugshaube ausgeführt werden kann.

Die Aufgabe wird daher erfindungsgemäß gelöst durch eine Dunstabzugshaube mit mindestens einem Leuchtmodul mit den Merkmalen des Anspruchs 1.

Als Leuchtmodul wird eine Komponente bezeichnet, die mindestens eine Lichtquelle aufweist und über die Licht ausgegeben werden kann. Das Leuchtmodul kann zusätzlich zu der Lichtquelle Befestigungsvorrichtungen, Steuervorrichtungen und/oder einen Netzanschluss aufweisen. Das Leuchtmodul kann mit einer Beleuchtungsvorrichtung, die an der Dunstabzugshaube zum Ausleuchten des Kochfeldes vorgesehen ist, kombiniert sein oder separat zu dieser Beleuchtungsvorrichtung vorliegen.

Das Leuchtmodul gibt erfindungsgemäß Licht in einem begrenzten Wellenlängenbereich aus. Als begrenzter Wellenlängenbereich wird hierbei ein Wellenlängenbereich bezeichnet, der kleiner ist als der Wellenlängenbereich des sichtbaren Lichts, der in dem Bereich von 400nm bis 700nm liegt.

Indem Licht in einem im Vergleich zu dem sichtbaren Bereich oder Spektrum geringeren Wellenlängenbereich von dem Leuchtmodul ausgegeben wird, kann eine Reihe von Vorteilen erzielt werden. Insbesondere kann das Licht zu Zwecken verwendet werden, die über das reine Ausleuchten eines Arbeitsbereiches hinausgehen. Insbesondere kann eine gezielte Wellenlänge ausgegeben werden, die beispielsweise für das Wachstum von Pflanzen oder die Photosynthese förderlich ist. Viele Benutzer verwenden zum Kochen gerne frische Kräuter und Gewürze. Diese werden in Töpfen oder anderen Gefäßen in der Küche aufbewahrt. Pflanzen werden in der Regel auf die Fensterbank gestellt, da diese Licht einer bestimmten Wellenlänge benötigen, um zu wachsen. Herkömmliche Dunsthaubenleuchten emittieren nicht in diesen Wellenlängenbereichen. Das Tageslichtspektrum deckt diese Wellenlängenbereiche ab, strahlt jedoch sehr breitbandig im kompletten sichtbaren Bereich. Daher ist das Nachbilden des Tageslichtspektrums mit einer Leuchte ineffizient und nicht geeignet um das Wachstum der Pflanzen zu fördern. Indem bei dem erfindungsgemäßen Leuchtmodul Licht in einem begrenzten Wellenlängenbereich ausgegeben wird, kann hingegen der Wellenlängenbereich so eingestellt sein, dass dieser gezielt zum Wachstum der Pflanzen beiträgt.

Das Einstellen des begrenzten Wellenlängenbereiches kann durch optische Elemente in dem Leuchtmodul erfolgen. Beispielsweise können Filter eingesetzt werden.

Erfindungsgemäß wird aber eine Lichtquelle verwendet, die Licht nur in dem oder den begrenzten Wellenlängenbereichen ausgibt. Hierdurch wird der Aufbau des Leuchtmoduls und damit der Dunstabzugshaube vereinfacht.

Gemäß einer bevorzugten Ausführungsform stellt die Lichtquelle eine LED (Light Emitting Diode) dar. Diese Ausführungsform weist eine Reihe von Vorteilen auf. Insbesondere sind LEDs dazu geeignet Licht nur in einem bestimmten Wellenlängenbereich auszugeben. Zudem ist der Platzbedarf für diese Art von Lichtquellen gering. Schließlich ist die Wärmeentwicklung beim Betrieb einer solchen Lichtquelle gering, wodurch auf eine spezielle Kühlung in dem Leuchtmodul verzichtet werden kann. Hierdurch vereinfacht sich der Aufbau des Leuchtmoduls und damit der Dunstabzugshaube weiter.

Erfindungsgemäß gibt das mindestens eine Leuchtmodul Licht in einem Wellenlängenbereich von 630-660nm, 400-520nm und / oder 700-750nm aus. Jeder dieser Bereiche kann von einer eigenen Lichtquelle ausgegeben werden. Insbesondere können mehrere LEDs in dem Leuchtmodul vorgesehen sein, wobei jede dieser LEDs Licht in einem der genannten Wellenlängenbereichen ausgibt. Diese LEDs können in dem Leuchtmodul separat vorgesehen sein oder in einem LED-Paket oder Package zusammengefasst sein. Die bevorzugten Wellenlängenbereiche sind insbesondere zur Wachstumsförderung von Pflanzen geeignet, da in diesen Bereichen insbesondere das Absorptionsspektrum von beispielsweise Chlorophyll liegt. Auch bei dieser Ausführungsform des Leuchtmoduls wird das Licht vorzugsweise nur in diesen Wellenlängenbereichen und nicht in dazwischenliegenden Wellenbereichen ausgegeben. Hierdurch wird eine Energieeinsparung gegenüber einer Lichtquelle, die Licht in einem breiteren Bereich, der die genannten engeren Bereiche einschließt, erzielt.

Gemäß einer Ausführungsform ist das mindestens eine Leuchtmodul mit der Steuerung der Dunstabzugshaube verbunden. Die Steuerung der Dunstabzugshaube kann insbesondere einer Steuereinheit sein, mittels derer der Lüfter der Dunstabzugshaube und gegebenenfalls weitere Beleuchtungsvorrichtungen der Dunstabzugshaube angesteuert werden. Die Verbindung des Leuchtmoduls gemäß der vorliegenden Erfindung mit der Steuerung der Dunstabzugshaube kann kabelgebunden oder drahtlos sein. Über die Verbindung kann das Leuchtmodul angesteuert und insbesondere aktiviert oder deaktiviert werden. Indem das Leuchtmodul mit der Steuerung der Dunstabzugshaube verbunden ist, ist der Aufbau des Leuchtmoduls weiter vereinfacht. Insbesondere ist beispielsweise das Vorsehen einer eigenen Bedieneinheit für das Leuchtmodul nicht notwendig und stattdessen kann die Bedieneinheit der Dunstabzugshaube entsprechend modifiziert werden, um dem Benutzer die Möglichkeit zu geben, das Leuchtmodul über die Bedieneinheit zu Aktivieren oder zu Deaktivieren.

Zusätzlich kann das Leuchtmodul auch mit der Stromversorgung der Dunstabzugshaube verbunden sein. Dies ist vorteilhaft, da insbesondere in Küchen die Steckdosen in der Regel bereits durch Küchengeräte besetzt sind.

Gemäß einer Ausführungsform ist das mindestens eine Leuchtmodul in die Dunstabzugshaube integriert. Als in die Dunstabzugshaube integriert wird ein Leuchtmodul bezeichnet, das in einer Aussparung der Dunstabzugshaube zumindest teilweise eingebracht ist. Insbesondere kann die Aussparung zur Aufnahme eines Gehäuses des Leuchtmoduls dienen.

Zusätzlich oder alternativ kann das mindestens eine Leuchtmodul an der Dunstabzugshaube befestigt sein. Hierbei kann die Befestigung eine lösbare Befestigung darstellen. Beispielsweise kann das Leuchtmodul in eine dafür vorgesehen Aussparung an der Dunstabzugshaube eingeschoben und verrastet werden. Alternativ kann das Leuchtmodul an der Außenseite der Dunstabzugshaube befestigt werden. Beispielsweise kann das Leuchtmodul mittels Magneten an der Dunstabzugshaube gehalten werden.

Ein Vorteil des Integrierens des Leuchtmoduls in die Dunstabzugshaube oder der Befestigung des Leuchtmoduls an der Dunstabzugshaube ist insbesondere, dass Licht in der Nähe der Dunstabzugshaube ausgegeben werden kann. Die Pflanzen, die mit diesem Licht versorgt werden sollen, können somit in der Nähe des Kochfeldes stehen und somit vom Benutzer während des Kochvorgangs auf einfache Weise erreicht werden.

Gemäß einer Ausführungsform liegt das Leuchtmodul an der Dunstabzugshaube in einer Höhe oberhalb der Sichthaube. Bei dieser Ausführungsform kann das Leuchtmodul beispielsweise in einen Kamin der Dunstabzugshaube integriert sein und Licht nach vorne oder zu zumindest einer Seite abgeben. Hierdurch kann eine Pflanze, die auf der Oberseite der Sichthaube, beispielsweise einer Box-Sichthaube abgestellt wird von dem Leuchtmodul mit Licht in der gewünschten Wellenlänge versorgen. Alternativ kann das Leuchtmodul an dem Kamin befestigt werden. Auch bei diesen Ausführungsformen, bei denen das Leuchtmodul nicht in die Dunstabzugshaube integriert ist, kann eine Pflanze, die auf der Sichthaube abgestellt ist, mit Licht in der gewünschten Wellenlänge versorgt werden.

Gemäß einer weiteren Ausführungsform liegt mindestens ein Leuchtmodul an der Unterseite der Dunstabzugshaube. Auch bei dieser Ausführungsform kann das Leuchtmodul in der Dunstabzugshaube integriert sein oder an der Dunstabzugshaube befestigt sein. Durch die Anordnung des Leuchtmoduls an der Unterseite können Pflanzen, die hinter oder neben dem Kochfeld stehen zuverlässig mit dem gewünschten Licht beleuchtet werden.

Gemäß einer Ausführungsform ist mindestens ein Leuchtmodul schwenkbar an der Dunstabzugshaube befestigt. Auch bei dieser Ausführungsform kann das Leuchtmodul in der Dunstabzugshaube integriert sein oder an der Dunstabzugshaube befestigt sein. Durch die schwenkbare Befestigung kann die Ausrichtung des Leuchtmoduls der aktuellen Position einer Pflanze angepasst werden.

Die vorliegende Erfindung wird im Folgenden erneut unter Bezugnahme auf die beiliegenden Figuren beschrieben. Es zeigen:
Figur 1: eine schematische Darstellung einer ersten Ausführungsform der erfindungsgemäßen Dunstabzugshaube;
Figur 2: eine schematische Darstellung einer zweiten Ausführungsform der erfindungsgemäßen Dunstabzugshaube;
Figur 3: eine schematische Darstellung einer dritten Ausführungsform der erfindungsgemäßen Dunstabzugshaube; und
Figur 4: eine schematische Darstellung eines Beispiels einer anderen Dunstabzugshaube, die nicht Gegenstand der Erfindung ist.

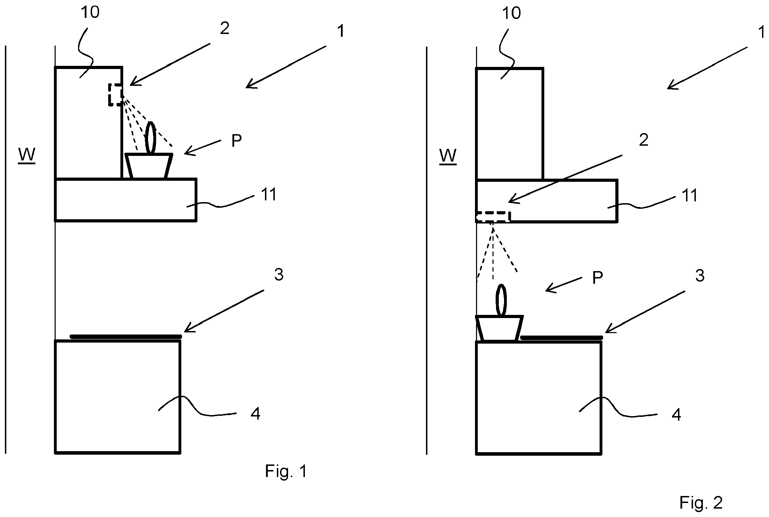

In Figur 1 ist eine erste Ausführungsform der erfindungsgemäßen Dunstabzugshaube 1 gezeigt. Die Dunstabzugshaube 1 stellt in der dargestellten Ausführungsform eine sogenannte Box-Haube dar. Die Dunstabzugshaube 1 besteht aus einem Kamin 10 und einer unterhalb des Kamins 10 angeordneten Sichthaube 11. Die Dunstabzugshaube 1 ist an der Rückseite an einer Wand W montiert und die Sichthaube 11 überragt den Kamin 10 nach vorne.

Unterhalb der Dunstabzugshaube 1 ist ein Kochfeld 3 gezeigt. Das Kochfeld 3 ist in der Oberseite eines Küchenschrankes 4 angeordnet.

Bei der ersten Ausführungsform ist in der Dunstabzugshaube 1 ein Leuchtmodul 2 integriert. Das Leuchtmodul 2 ist in der Vorderseite des Kamins 10 so integriert, dass dieses Licht über die Vorderseite des Kamins 10 abgeben kann. Vorzugsweise bei dieser Ausführungsform ist das Leuchtmodul 2 so ausgelegt oder so in der Dunstabzugshaube 1 integrierte, dass dieses Licht schräg nach unten abgeben kann. Wie in der Figur 1 gezeigt, kann somit das von dem Leuchtmodul abgegebene Licht auf die Oberseite der Sichthaube 11 in dem Bereich gerichtet werden, der über den Kamin 10 nach vorne übersteht. Ist, wie in Figur 1 angedeutet auf der Oberseite der Sichthaube 11 eine Pflanze, beispielsweise Kräuter, platziert, so erreicht das Licht des Leuchtmoduls 2 die Pflanze. Das Leuchtmodul 2 ist so ausgelegt, dass dieses Licht im Wellenlängenbereich von jeweils 630-660nm, 400-520nm und 700- 750nm abgibt. Hierzu können in dem Leuchtmodul 2 eine oder mehrere Lichtquellen (nicht gezeigt), insbesondere LEDs, aufgenommen sein.

Die zweite Ausführungsform, die in Figur 2 gezeigt ist, unterscheidet sich von der ersten Ausführungsform durch die Anordnung des Leuchtmoduls 2 in der Dunstabzugshaube 1. Auch bei der zweiten Ausführungsform ist das Leuchtmodul 2 in der Dunstabzugshaube 1 integriert. Allerdings ist das Leuchtmodul 2 in die Unterseite der Dunstabzugshaube 1 eingebracht. Beispielsweise kann das Leuchtmodul 2 hinter einer Ansaugöffnung (nicht gezeigt) der Dunstabzugshaube 1 in die Unterseite der Sichthaube 11 eingebracht sein. Das Leuchtmodul 2 ist dabei so angeordnet und ausgerichtet, dass dieses Licht nach unten abgibt. Hierdurch kann eine Pflanze P, die beispielsweise hinter dem Kochfeld 3 auf dem Küchenschrank 4 platziert wird, von dem Licht erfasst und damit beleuchtet werden.

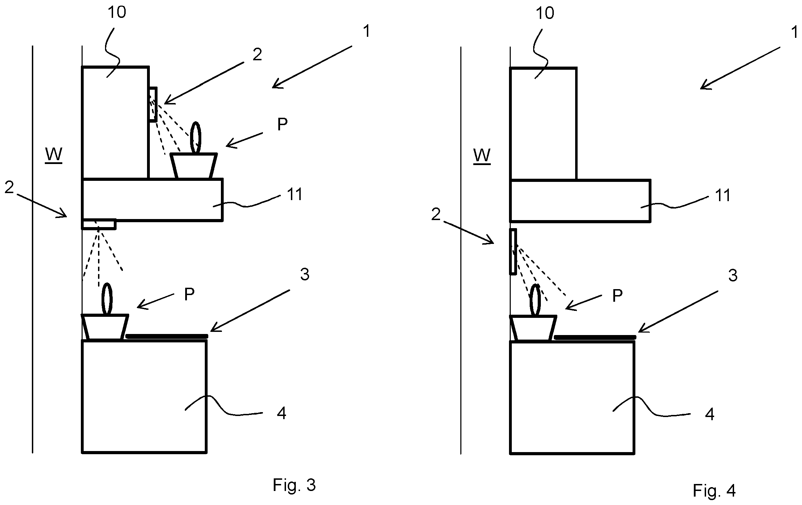

Die dritte Ausführungsform der Dunstabzugshaube 1, die in Figur 3 gezeigt ist, unterscheidet sich von der ersten und zweiten Ausführungsform zum einen dadurch, dass bei der dritten Ausführungsform zwei Leuchtmodule 2 vorgesehen sind. Zum anderen sind die Leuchtmodule 2 bei der dritten Ausführungsform nicht in die Dunstabzugshaube 1 integriert, sondern an dieser von außen befestigt.

In dem Beispiel, das in Figur 4 gezeigt ist, ist das Leuchtmodul 2 eine zu der Dunstabzugshaube 1 separate Komponente. In dem gezeigten Zustand ist diese Komponente an der Wand W unterhalb der Dunstabzugshaube 1 befestigt. Die Komponente kann allerdings beispielsweise auch auf den Küchenschrank 4 gestellt werden.

Bei der erfindungsgemäßen Dunstabzugshaube wird vorzugsweise ein Leuchtmodul verwendet, das wachstumsfördernde LED (s), das heißt LED(s) mittels derer das Pflanzenwachstum gefördert werden kann, aufweist und das einen definierten Bereich damit bestrahlt.

Herkömmliche Leuchten, die in Dunsthauben verwendet werden, beispielsweise Glühbirnen, emittieren nahezu über dem gesamten Bereich der sichtbaren Wellenlänge. Ziel dieser herkömmlichen Leuchten, ist es dass die Farbe nahe der "Black Body Curve" zwischen ~2500K und 5000 K im CIE Diagramm liegt, um ein weißes Licht zu erzeugen.

Bei dem erfindungsgemäßen Leuchtmodul ist es gewünscht möglichst nur in den Wellenlängen abzustrahlen, in denen Pflanzen die Energie absorbieren. Hierdurch kann man mit der gleichen Leistung, die zum Betreiben des Leuchtmoduls erforderlich ist, mehr "nutzbares" Licht zur Verfügung stellen als bei herkömmlichen Leuchten, da Licht in den Wellenlängen zwischen ca. 520 und 600 nm für das Wachstum der Pflanzen nicht relevant ist.

Bei der vorliegenden Erfindung werden vorzugsweise LED-Chips und Pakete, die auch als Packages bezeichnet werden können, verwendet, die eine gleichwertige Funktion von Leuchten, die beispielsweise in Gewächshäusern verwendet werden, übernehmen und dabei wesentlich kleinere Bauräume und einen geringeren Leistungsbedarf ermöglichen.

Bei der vorliegenden Erfindung handelt es sich bei dem Leuchtmodul vorzugsweise um eine LED-basierte Komponente zur Verwendung mit Dunstabzugshauben. Mit dieser Komponente wird ein definierter Bereich bestrahlt, in dem eine Pflanze oder beispielsweise ein Kräutergarten platziert werden kann. Die Bestrahlung erfolgt hierbei hauptsächlich in den Wellenlängen 630-660nm, 400-520nm sowie 740nm.

Das Leuchtmodul ist vorzugsweise so ausgelegt, dass es durch ein Baukastensystem auf unterschiedliche Anwendungsbereiche, konfiguriert werden kann, das heißt mit unterschiedlichen Dunstabzugshauben verwendet werden kann.

Beispielsweise kann das Leuchtmodul in die Dunstabzugshaube integriert werden. Die Dunstabzugshaube kann dabei einen definierten Ablageplatz für beispielsweise den Kräutergarten bieten. Beispielsweise kann die Komponente in dem Kamin, der auch als Kanal bezeichnet werden kann einer klassischen Box-Haube integriert werden.

Alternativ oder zusätzlich kann die Bestrahlung auf eine Bestrahlung einer definierten Fläche auf der Arbeitsplatte der Küche ausgelegt werden. Hierzu kann das Leuchtmodul beispielsweise an der Unterseite der Dunstabzugshaube positioniert werden.

Die vorliegende Erfindung bietet eine Reihe von Vorteilen. Zum einen ist für den Benutzer neben der Lüfter- und normalen Beleuchtungsfunktion der Dunstabzugshaube eine weitere Funktion in ein vorhandenes Gerät, nämlich die Dunstabzugshaube, integriert. Hierbei wird kein Zusatzgerät benötigt und somit entsteht kein zusätzlicher Platzbedarf in der Küche. Zudem kann der Benutzer die an den Kochstellen benötigten Kräuter direkt aus einem Kräutergarten entnehmen, der auf, unter oder neben der Haube steht.

### Bezugszeichenliste

- 1: Dunstabzugshaube
- 10: Kamin
- 11: Sichthaube
- 2: Leuchtmodul
- 3: Kochfeld
- 4: Küchenschrank

- P: Pflanze
- W: Wand

## Patentansprüche

1. Dunstabzugshaube mit mindestens einem Leuchtmodul (2), wobei das Leuchtmodul (2) mindestens eine Lichtquelle aufweist und das Leuchtmodul (2) Licht in mindestens einem begrenzten Wellenlängenbereich ausgibt, **dadurch gekennzeichnet, dass** die mindestens eine Lichtquelle Licht nur in dem oder den begrenzten Wellenlängenbereichen ausgibt, die Wellenlängenbereiche 630-660nm, 400-520nm und/oder 700- 750nm sind und das Leuchtmodul (2) oberhalb einer Sichthaube der Dunstabzugshaube in einem Kamin der Dunstabzugshaube so integriert ist, dass dieses Licht nach vorne oder zu zumindest einer Seite abgibt,
oberhalb einer Sichthaube der Dunstabzugshaube an dem Kamin der Dunstabzugshaube befestigt ist,
in der Unterseite der Dunstabzugshaube integriert ist oder
an der Unterseite der Dunstabzugshaube befestigt ist.

2. Dunstabzugshaube nach Anspruch 1, **dadurch gekennzeichnet, dass** die Lichtquelle eine LED darstellt.

3. Dunstabzugshaube nach einem der Ansprüche 1 oder 2, **dadurch gekennzeichnet, dass** das mindestens eine Leuchtmodul (2) mit der Steuerung der Dunstabzugshaube (1) verbunden ist.

4. Dunstabzugshaube nach einem der Ansprüche 1 bis 3, **dadurch gekennzeichnet, dass** die Dunstabzugshaube (1) eine Sichthaube (11) aufweist und mindestens ein Leuchtmodul (2) an der Dunstabzugshaube (1) in einer Höhe oberhalb der Sichthaube (11) liegt.

5. Dunstabzugshaube nach einem der Ansprüche 1 bis 4, **dadurch gekennzeichnet, dass** mindestens ein Leuchtmodul (2) schwenkbar an der Dunstabzugshaube (1) befestigt ist.

## Claims

1. Vapour extractor hood having at least one light module (2), wherein the light module (2) has at least one light source and the light module (2) emits light in at least one limited wavelength range, **characterised in that** the at least one light source emits light only in the limited wavelength range(s), the wavelength ranges are 630-660 nm, 400-520 nm and/or 700-750 nm and the light module (2) is integrated in a flue of the extractor hood above a viewing hood of the extractor hood, such that it emits light forwards or to at least one side,
is attached to the flue of the extractor hood above a viewing hood of the extractor hood, is integrated in the underside of the extractor hood or
is attached to the underside of the extractor hood.

2. Vapour extractor according to claim 1, **characterised in that** the light source represents an LED.

3. Vapour extractor according to one of claims 1 or 2, **characterised in that** the at least one lighting module (2) is connected to the controller of the extractor hood (1).

4. Vapour extractor according to one of claims 1 to 3, **characterised in that** the extractor hood (1) has a viewing hood (11) and at least one lighting module (2) is located on the extractor hood (1) at a height above the viewing hood (11).

5. Vapour extractor according to one of claims 1 to 4, **characterised in that** at least one lighting module (2) is pivotably attached to the extractor hood (1).

## Revendications

1. Hotte aspirante comportant au moins un module d'éclairage (2), le module d'éclairage (2) comportant au moins une source de lumière, le module d'éclairage (2) émettant de la lumière dans au moins une plage de longueurs d'onde limitée, **caractérisée en ce que** l'au moins une source de lumière n'émet de lumière que dans la ou les plage/s de longueurs d'onde limitées, les plages de longueurs d'onde étant de 630 à 660nm, de 400 à 520nm et/ou de 700 à 750nm, le module d'éclairage (2) étant soit incorporé au-dessus d'une calotte de visée de la hotte aspirante dans une cheminée de la hotte aspirante de manière qu'il émette cette lumière vers l'avant ou au moins vers un côté, soit fixé au-dessus d'une calotte de visée de la hotte aspirante sur la cheminée de la hotte aspirante, soit intégré dans la face inférieure de la hotte aspirante soit fixé sur la face inférieure de la hotte aspirante.

2. Hotte aspirante selon la revendication 1, **caractérisée en ce que** la source de lumière est une DEL.

3. Hotte aspirante selon l'une des revendications 1 ou 2, **caractérisée en ce que** l'au moins un module d'éclairage (2) est relié au système de commande de la hotte aspirante (1).

4. Hotte aspirante selon l'une des revendications 1 à 3, **caractérisée en ce que** la hotte aspirante (1) comporte une calotte de visée (11) et **en ce qu'**au moins un module d'éclairage (2) est disposé sur la hotte aspirante (1) à un niveau au-dessus de la calotte de visée (11).

5. Hotte aspirante selon l'une des revendications 1 à 4, **caractérisée en ce qu'**au moins un module d'éclairage (2) est monté pivotant sur la hotte aspirante (1).
